# EUROPÄISCHE PATENTSCHRIFT

(11) **EP 2 698 039 B1**
(45) Veröffentlichungstag und Bekanntmachung des Hinweises auf die Patenterteilung: **18.02.2015**
(21) Anmeldenummer: 12718095.8
(22) Anmeldetag: 27.03.2012
(51) Int. Cl.: H05B 3/84

(54) **FLÄCHENHEIZKÖRPER UND VERFAHREN ZU DESSEN HERSTELLUNG**
PANEL HEATING ELEMENT AND METHOD FOR PRODUCING SAME
ÉLÉMENT CHAUFFANT PLAN ET SON PROCÉDÉ DE FABRICATION

(30) Priorität: 12.04.2011 EP 11162131; 12.04.2011 EP 11162134
(43) Veröffentlichungstag der Anmeldung: 19.02.2014
(73) Patentinhaber: Saint-Gobain Glass France, 92400 Courbevoie (FR)
(72) Erfinder: ROYER, Bastien, 53424 Remagen (DE); YEH, Li-Ya, 52511 Geilenkirchen (DE); LISINSKI, Susanne, 50739 Köln (DE); KLEIN, Marcel, 52499 Baesweiler (DE); PHAN, Dang Cuong, 52062 Aachen (DE)
(74) Vertreter: Gebauer, Dieter Edmund
(86) Internationale Anmeldenummer: PCT/EP2012/055436
(87) Internationale Veröffentlichungsnummer: WO 2012/139883

(56) Entgegenhaltungen:
- DE-A1- 19 860 870
- DE-A1-102004 029 164
- FR-A1- 2 592 544
- US-A- 4 251 316
- US-A1- 2005 221 062

## Beschreibung

Flächenheizkörper mit einem Substrat und einer elektrischen Heizschicht sind als solche wohlbekannt und bereits vielfach in der Patentliteratur beschrieben worden. Lediglich beispielhaft sei in diesem Zusammenhang auf die deutschen Offenlegungsschriften DE 102008018147 A1 und DE 102008029986 A1 verwiesen. In Kraftfahrzeugen werden sie häufig als Windschutzscheiben eingesetzt, da das zentrale Sichtfeld von Windschutzscheiben aufgrund gesetzlicher Vorgaben keine wesentlichen Sichteinschränkungen aufweisen darf.

Aus der industriellen Serienfertigung von Flächenheizkörpern ist die Strukturierung der Heizschicht durch Trennlinien zur Formung eines in der Regel gewundenen Strompfads bekannt. Dies hat den Vorteil, dass der elektrische Widerstand erhöht und der Strompfad durch relativ kleine Anschlusselektroden kontaktiert werden kann. In der Patentliteratur ist ein solcher Flächenheizkörper beispielsweise in der deutschen Offenlegungsschrift DE 19860870 A1 beschrieben.

Bei solchen Flächenheizkörpern tritt das Problem auf, dass im Bereich einer Krümmung des Strompfads die Stromverteilung inhomogen wird und lokale Wärmezentren ("Hot Spots") entstehen können. Diese Hot Spots verursachen eine ungleichmäßige Wärmeverteilung im Flächenheizkörper und können aufgrund einer lokalen Überhitzung zu einer Beeinträchtigung und gegebenenfalls sogar Schädigung der Heizschicht oder des Substrats führen. Darüber hinaus kann bei transparenten Scheiben an den Überhitzungspunkten die optische Wahrnehmung durch die Scheibe beeinträchtigt sein.

Eine Lösung dieses Problems ist in der US-amerikanischen Patentanmeldung US 2005/221062 A1 offenbart. Demnach sind an den freien Enden der Trennlinien bogenförmig gekrümmte Hilfslinien vorgesehen, durch die der Strompfad in eine Mehrzahl paralleler Teilstrompfade aufgeteilt wird.

Demgegenüber besteht die Aufgabe der vorliegenden Erfindung darin, einen Flächenheizkörper zur Verfügung zu stellen, bei dem an Krümmungen des gewundenen Strompfads das Auftreten lokaler Wärmezentren durch eine alternative Lösung verhindert und eine ebenso gleichmäßige Wärmeverteilung erreicht werden kann. Diese und weitere Aufgaben werden nach dem Vorschlag der Erfindung durch einen Flächenheizkörper und ein Verfahren zu dessen Herstellung mit den Merkmalen der nebengeordneten Patentansprüche gelöst. Vorteilhafte Ausgestaltungen der Erfindung sind durch die Merkmale der Unteransprüche angegeben.

Erfindungsgemäß ist ein Flächenheizkörper gezeigt, mit zumindest einem flächigen Substrat mit einer Substratfläche und einer elektrischen Heizschicht aus einem elektrisch leitfähigen Material zum Heizen des Substrats, die sich zumindest über einen Teil der Substratfläche erstreckt und mit mindestens zwei zum Anschluss an eine Spannungsquelle vorgesehene Elektroden so verbunden ist, dass zwischen den Elektroden ein Strompfad für einen Heizstrom geformt ist. Die Heizschicht kann direkt auf das Substrat aufgebracht sein. Denkbar ist jedoch auch, die Heizschicht auf einen Träger aufzubringen, beispielsweise eine Kunststoff-Folie, insbesondere eine PET-Folie (PET = Polyethylenterephthalat), der dann mit dem Substrat verbunden, beispielsweise verklebt wird. Bei dem Flächenheizkörper kann es sich insbesondere um eine Verbundscheibe handeln, bei der zwei Einzelscheiben durch eine Klebschicht miteinander verbunden sind.

Der Flächenheizkörper umfasst eine oder mehrere Trennzonen, welche die Heizschicht abschnittsweise elektrisch unterteilen. Die Trennzonen verfügen jeweils über mindestens ein innerhalb der Heizschicht frei endendes (freies) Zonenende und sind so ausgebildet, dass der Strompfad an den freien Zonenenden jeweils seine Verlaufsrichtung ändert, beispielsweise um 180°. Vorzugsweise, jedoch nicht zwingend, sind die Trennzonen als Trennlinien linienförmig, insbesondere geradlinig, ausgebildet.

An das freie Zonenende einer jeden Trennzone schließt sich unmittelbar (in fluchtender Verlängerung) eine Übergangszone an, welche so ausgebildet ist, dass eine elektrische Leitfähigkeit der Heizschicht zum freien Zonenende hin abnimmt, d.h. bis auf Null abnimmt. Vorzugsweise, jedoch nicht zwingend, ist die Übergangszone so ausgebildet, dass die elektrische Leitfähigkeit der Heizschicht zum freien Zonenende hin kontinuierlich, insbesondere linear, abnimmt. Vorzugsweise, jedoch nicht zwingend, sind die Übergangszonen linienförmig, insbesondere geradlinig, ausgebildet. Am Beginn der Übergangszone beträgt die elektrische Leitfähigkeit Null. Das Ende der Übergangszone ist durch den Bereich gegeben, in dem die zunehmende elektrische Leitfähigkeit die volle elektrische Leitfähigkeit der Heizschicht erlangt hat.

Der erfindungsgemäße Flächenheizkörper ermöglicht in vorteilhafter Weise durch eine räumliche Variation des elektrischen Widerstands der Heizschicht eine Homogenisierung des Stromflusses im Bereich einer Krümmung des Strompfads an den freien Zonenenden.

Bei einer vorteilhaften Ausgestaltung des erfindungsgemäßen Flächenheizkörpers sind die Übergangszonen so ausgebildet, dass eine Schichtdicke der Heizschicht variiert. Hierbei nimmt die Schichtdicke der Heizschicht hin zum freien Zonenende ab bzw. weg vom freien Zonenende zu. Der Beginn der Übergangszone ist durch das freie Zonenende definiert, an dem die Schichtdicke der Heizschicht Null ist. Das Ende der Übergangszone ist definiert durch das Erreichen der vollen Schichtdicke bzw. vollen elektrischen Leitfähigkeit der Heizschicht. Vorzugsweise, jedoch nicht zwingend, ist die Übergangszone so ausgebildet, dass die Schichtdicke der Heizschicht zum freien Zonenende hin kontinuierlich, insbesondere linear, abnimmt.

Bei einer weiteren vorteilhaften Ausgestaltung des erfindungsgemäßen Flächenheizkörpers sind die Übergangszonen so ausgebildet, dass eine Porosität der Heizschicht zum freien Zonenende hin zunimmt, so dass in entsprechender Weise eine Abnahme der elektrischen Leitfähigkeit erreicht werden kann.

Bei einer weiteren vorteilhaften Ausgestaltung des erfindungsgemäßen Flächenheizkörpers, bei der die Heizschicht einen Dotierstoff zur Erhöhung der elektrischen Leitfähigkeit aufweist, sind die Übergangszonen so ausgebildet, dass eine Konzentration des Dotierstoffs in der Übergangszone zum freien Zonenende hin abnimmt, so dass in entsprechender Weise eine Abnahme der elektrischen Leitfähigkeit erreicht werden kann.

Bei einer weiteren vorteilhaften Ausgestaltung des erfindungsgemäßen Flächenheizkörpers, bei der die Heizschicht einen Dotierstoff zur Verminderung der elektrischen Leitfähigkeit aufweist, sind die Übergangszonen so ausgebildet, dass eine Konzentration des Dotierstoffs in der Übergangszone zum freien Zonenende hin zunimmt, so dass in entsprechender Weise eine Abnahme der elektrischen Leitfähigkeit erreicht werden kann.

Bei einer vorteilhaften Ausführungsform des Flächenheizkörpers weist die Übergangszone an einem freien Zonenende eine Länge auf, die wenigstens der Hälfte einer sich senkrecht zu dessen Erstreckung sich bemessenden Breite des Strompfads am freien Zonenende entspricht, wodurch eine besonders gute Homogenisierung des Stromflusses erreicht werden kann.

Bei einer vorteilhaften Ausführungsform des Flächenheizkörpers ist auf die Substratfläche ein mit der elektrischen Heizschicht versehener Träger, beispielsweise eine Kunststoff-Folie, aufgebracht, wobei die Heizschicht in der oben beschriebenen Weise ausgebildet ist. Die Kunststoff-Folie dient somit als flächenhafter Träger für die Heizschicht. Die Folie kann aus jedem für die Anwendung geeigneten Kunststoff bestehen, beispielsweise aus Polyamid (PA), Polyurethan (PU), Polyvinylchlorid (PVC), Polycarbonat (PC), Polyester (PE), Polyvinylbutyral (PVB) oder Polyethylenterephthalat (PET).

Ferner erstreckt sich die Erfindung auf einen solchen Träger, beispielsweise eine Kunst-stoff-Folie, mit einer zumindest auf einen Teil einer Trägerfläche aufgebrachten elektrischen Heizschicht und mit mindestens zwei zum Anschluss an eine Spannungsquelle vorgesehene Elektroden, die mit der Heizschicht so verbunden sind, dass zwischen den Elektroden ein Strompfad für einen Heizstrom geformt ist. Die Heizschicht ist in der oben beschriebenen Weise ausgebildet. Demnach ist die Heizschicht durch eine oder mehrere Trennzonen elektrisch unterteilt, die jeweils über mindestens ein freies Zonenende verfügen und so ausgebildet sind, dass der Strompfad an den freien Zonenenden seine Verlaufsrichtung ändert, wobei sich an das freie Zonenende einer jeden Trennzone jeweils eine Übergangszone anschließt, in der die elektrische Leitfähigkeit der Heizschicht zum freien Zonenende hin abnimmt.

Des Weiteren erstreckt sich die Erfindung auf ein Verfahren zur Herstellung eines wie oben beschrieben ausgebildeten Flächenheizkörpers mit den Schritten:
- Bereitstellen zumindest eines flächigen Substrats mit einer Substratfläche und einer elektrischen Heizschicht zum Heizen des Substrats, die sich zumindest über einen Teil der Substratfläche erstreckt und mit mindestens zwei zum Anschluss an eine Spannungsquelle vorgesehene Elektroden so verbunden ist, dass zwischen den Elektroden ein Strompfad für einen Heizstrom geformt ist;
- elektrisches Unterteilen der Heizschicht durch eine oder mehrere, vorzugsweise linienförmige, insbesondere geradlinige, Trennzonen, wobei die Trennzonen jeweils über mindestens ein freies Zonenende verfügen und so ausgebildet sind, dass der Strompfad an den freien Zonenenden seine Verlaufsrichtung ändert;
- Erzeugen von vorzugsweise linienförmigen, insbesondere geradlinigen, Übergangszonen, welche sich jeweils an das freie Zonenende anschließen, derart, dass eine elektrische Leitfähigkeit der Heizschicht, insbesondere gegeben durch eine Verminderung der Schichtdicke der Heizschicht, zum freien Zonenende hin, insbesondere kontinuierlich, beispielsweise linear, abnimmt.

Wie oben bereits angegeben, können in dem erfindungsgemäßen Verfahren zum Zweck einer Variation der elektrischen Leitfähigkeit der Heizschicht die Übergangszonen so gestaltet werden, dass die Schichtdicke der Heizschicht zum freien Zonenende hin abnimmt. Denkbar ist auch, die Übergangszonen so zu gestalten, dass eine Porosität der Heizschicht zum freien Zonenende hin zunimmt, eine Konzentration von die elektrische Leitfähigkeit der Heizschicht verbessernden Dotierstoffionen zum freien Zonenende hin abnimmt und/oder eine Konzentration von die elektrische Leitfähigkeit der Heizschicht verschlechternden Dotierstoffionen zum freien Zonenende hin zunimmt.

Bei einer vorteilhaften Ausgestaltung des erfindungsgemäßen Verfahrens wird ein mit der elektrischen Heizschicht versehener Träger, insbesondere eine Kunststoff-Folie, aufgebracht, wobei die Heizschicht in der oben beschriebenen Weise ausgebildet ist.

Ferner erstreckt sich die Erfindung auf die Verwendung eines wie oben beschriebenen Flächenheizkörpers als funktionales Einzelstück und als Einbauteil in Möbeln, Geräten und Gebäuden, insbesondere als Heizkörper in Wohnräumen, beispielsweise als wandmontierbarer oder frei stehender Heizkörper, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

Es versteht sich, dass die verschiedenen Ausgestaltungen der Erfindung einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Kurze Beschreibung der Zeichnungen

Die Erfindung wird nun anhand eines Ausführungsbeispiels näher erläutert, wobei Bezug auf die beigefügten Figuren genommen wird. Es zeigen in vereinfachter, nicht maßstäblicher Darstellung:
- Fig. 1: eine Ausführungsform des erfindungsgemäßen Flächenheizkörpers mit Trenn- und Übergangszonen in Aufsicht und in Querschnittsdarstellung;
- Fig. 2A-2B: den Flächenheizkörper von Fig. 1 mit eingezeichnetem Strompfad in Aufsicht (Fig. 2A), sowie einen herkömmlichen Flächenheizkörper ohne Übergangszonen (Fig. 2B);
- Fig. 3: einen herkömmlichen Flächenheizkörper mit Darstellung lokaler Wärmezentren in Aufsicht.

### Ausführliche Beschreibung der Zeichnungen

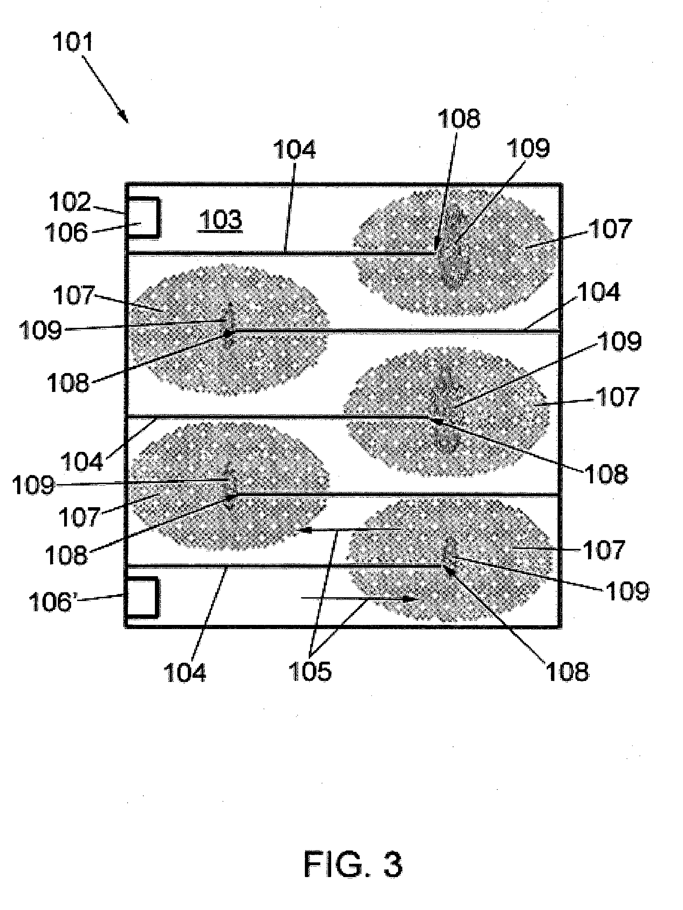

Sei zunächst Fig. 3 betrachtet, worin ein insgesamt mit der Bezugszahl 101 bezeichneter Flächenheizkörper gemäß dem Stand der Technik gezeigt ist. Der Flächenheizkörper 101 umfasst ein Substrat 102, auf das eine elektrische Heizschicht 103 aufgebracht ist. Die Heizschicht 103 ist durch geradlinige Trennzonen 104 (Trennlinien) elektrisch so unterbrochen, dass eine zusammenhängende mäander- bzw. S-förmige Struktur von der Heizschicht 103 gebildet wird, welche an ihren beiden Enden von den beiden Anschlusselektroden 106, 106' elektrisch kontaktiert ist, so dass ein mäanderförmig gewundener Strompfad 105 für einen an den Anschlusselektroden 106, 106' eingespeisten Heizstrom gebildet wird. Durch den Heizstrom wird der Flächenheizkörper 101 erwärmt. Die Trennzonen 104 verfügen jeweils über ein freies Zonenende 108 in der Heizschicht 102.

In Änderungszonen 107, in denen jeweils ein frei endendes Zonenende 108 einer geradlinigen Trennzone 104 enthalten ist, kehrt der Strompfad 105 bzw. Heizstrom mehrmals seine Verlaufsrichtung um 180° um. In den Änderungszonen 107 hat der Strompfad 105 demnach einen gekrümmten Verlauf, wodurch eine ungleichmäßige Stromdichteverteilung mit einer Konzentrierung des Stromflusses an den freien Zonenenden 108 resultiert. Dies führt typischer Weise zum Auftreten lokal überhitzter Stellen bzw. Hot Spots 109 an den Zonenenden 108. Neben einer ungleichmäßigen Wärmeverteilung im Flächenheizkörper 101 kann dieser Umstand zu einer Schädigung der Heizschicht 103 und/oder des Substrats 102 führen.

Die vorliegende Erfindung löst dieses Problem, indem sie die Verteilung des Stromflusses in den Bereichen einer Krümmung des Strompfades homogenisiert, so dass eine Konzentration des Stromflusses an den Umkehrstellen des Strompfades zumindest weitgehend vermieden wird.

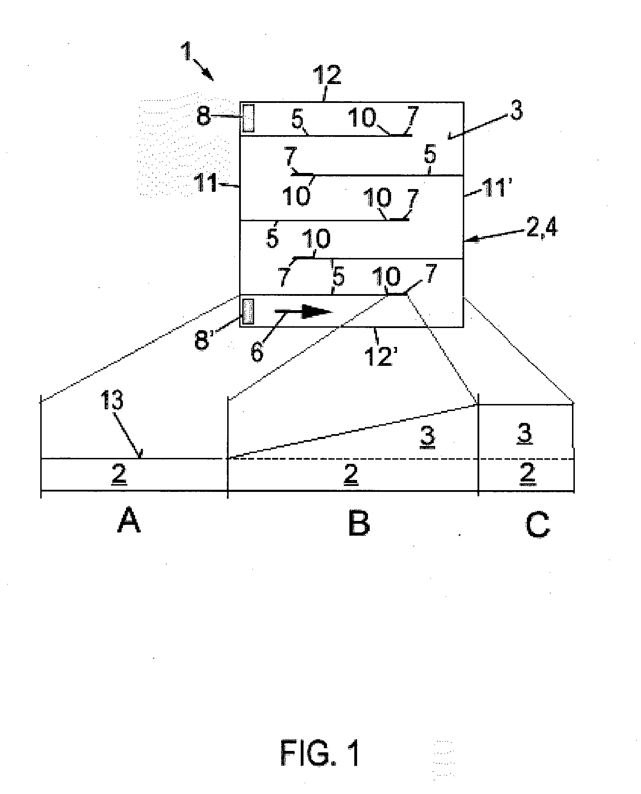

Dies wird im Weiteren näher erläutert. Sei zunächst Fig. 1 betrachtet, worin eine Ausführungsform eines insgesamt mit der Bezugszahl 1 bezeichneten, erfindungsgemäßen Flächenheizkörpers gezeigt ist. Fig. 1 zeigt den Flächenheizkörper 1 in einer Gesamtdarstellung (oben), sowie einen vergrößerten Ausschnitt hiervon (unten).

Demnach umfasst der Flächenheizkörper 1 wenigstens ein Substrat 2, auf das eine elektrisch leitende Heizschicht 3 im Wesentlichen vollflächig aufgebracht ist. Als Material für das Substrat 2 kann beispielsweise Glas, Keramik oder Kunststoff dienen. Ein gläsernes Substrat 2 kann beispielsweise aus Floatglas, Gussglas oder Keramikglas bestehen. Ein Kunststoff-Substrat 2 kann beispielsweise aus Polystyrol (PS), Polyamid (PA), Polyester (PE), Polyvinylchlorid (PVC), Polycarbonat (PC), Polymethylmethacrylat (PMA) oder Polyethylenterephtalat (PET) gefertigt sein. Allgemein kann für das Substrat 2 jedes Material mit ausreichender chemischer Beständigkeit, geeigneter Form- und Größenstabilität, sowie gegebenenfalls hinreichender optischer Transparenz verwendet werden. In der Anwendung als Fahrzeugscheibe, beispielsweise Windschutzscheibe, wird typischer Weise ein für sichtbares Licht transparentes Substrat 2 gewählt, wobei in der Anwendung als Heizkörper zum Beheizen eines Innen- oder Außenbereichs auch ein Keramikträger zum Einsatz kommen kann. Metallische leitende Träger sind ebenso als Substrat 2 geeignet, wenn die Heizschicht 3 durch eine elektrische Isolationsschicht von diesem getrennt wird. Ein metallischer Träger weist zudem den Vorteil auf, dass die durch die Heizschicht 3 erzeugte Wärme aufgrund der hohen thermischen Leitfähigkeit von Metallen gut fortgeleitet werden kann.

Die Heizschicht 3 enthält ein elektrisch leitfähiges Material. Beispiele hierfür sind Metalle mit einer hohen elektrischen Leitfähigkeit wie Titan, Mangan, Indium, Chrom, Silber, Kupfer, Gold, Aluminium oder Molybdän, Metall-Legierungen wie mit Palladium legiertes Silber, sowie transparente, leitfähige Oxide (TCO = Transparent Conductive Oxides). Bei TCO handelt es sich vorzugsweise um Indiumzinnoxid, fluordotiertes Zinndioxid, aluminiumdotierts Zinndioxid, galliumdotiertes Zinndioxid, bordotiertes Zinndioxid, Zinnzinkoxid oder antimondotiertes Zinnoxid. Die Heizschicht 3 kann aus einer leitfähiggen Einzelschicht oder einem Schichtenaufbau, der zumindest eine leitfähige Teilschicht enthält, bestehen. Beispielsweise umfasst ein solcher Schichtenaufbau mindestens eine leitfähige Teilschicht, vorzugsweise Silber (Ag), und weitere Teilschichten wie Entspiegelungs- und Blockerschichten. Die Schichtdicke der Heizschicht 3 kann breit variieren, wobei die Schichtdicke an jeder Stelle beispielsweise im Bereich von 0,1 nm bis 100 µm liegt. Im Falle von TCO liegt die Schichtdicke beispielsweise im Bereich von 100 nm bis 1,5 µm, bevorzugt im Bereich von 150 nm bis 1 µm und stärker bevorzugt im Bereich von 200 nm bis 500 nm. Beispielsweise liegt die Schichtdicke einer Titanschicht im Bereich von 0,1 bis 2 nm, die Schichtdicke einer Manganschicht im Bereich von 0,1 bis 1 nm, die Schichtdicke einer Molybdänschicht im Bereich von 0,1 bis 1 nm, die Schichtdicke einer Silberschicht im Bereich von 1 bis 50 nm, die Schichtdicke einer Indiumschicht im Bereich von 50 bis 200 nm, die Schichtdicke einer Goldschicht im Bereich von 1 bis 10 nm und die Schichtdicke einer Chromschicht beträgt beispielsweise ca. 1 nm. Der Schichtwiderstand der Heizschicht 3 ist beispielsweise geringer als 20 Ohm und liegt insbesondere im Bereich von 0,1 bis 20 Ohm. Im gezeigten Ausführungsbeispiel liegt der Schichtwiderstand der Heizschicht 3 beispielsweise im Bereich von 1 bis 5 Ohm.

Die Heizschicht 3 ist beispielsweise aus der Gasphase abgeschieden, zu welchem Zweck an sich bekannte Verfahren wie chemische Gasphasenabscheidung (CVD = Chemical Vapor Deposition) oder physikalische Gasphasenabscheidung (PVD = Physical Vapor Deposition) eingesetzt werden können. Vorzugsweise wird die Heizschicht 3 durch Sputtern (Magnetron-Kathodenzerstäubung) abgeschieden.

Die Heizschicht 3 ist hier beispielsweise auf einen Träger 4 abgeschieden, der dann mit dem Substrat 2 verbunden, beispielsweise verklebt, wird. Bei einem solchen Träger 4 kann es sich insbesondere um eine Kunststofffolie handeln, die beispielsweise aus Polyethylenterephthalat (PET), Polyamid (PA), Polyurethan (PU), Polyvinylchlorid (PVC), Polycarbonat (PC), Polyester (PE) oder Polyvinylbutyral (PVB) besteht. Denkbar ist jedoch auch, die Heizschicht 3 direkt auf das Substrat 2 abzuscheiden.

Dient der Flächenheizkörper 1 als beheizbare Fahrzeug-Windschutzscheibe muss er hinreichend transparent für sichtbares Licht im Wellenlängenbereich von 350 nm bis 800 nm sein, wobei unter dem Begriff "Transparenz" eine hohe Lichtdurchlässigkeit von beispielsweise mehr als 80% zu verstehen ist. Dies kann insbesondere durch ein gläsernes Substrat 2 und eine transparente Heizschicht 3 aus Silber (Ag) erreicht werden. Im Allgemeinen ist die Wahl der Heizschicht 3 nicht auf ein bestimmtes Material beschränkt, solange durch dieses Material eine flächige, elektrische Heizung auf dem Substrat 2 realisiert werden kann.

Das Substrat 2 ist beispielsweise in Quaderform ausgebildet, wobei das Substrat 2 über zwei gegenüberliegende erste Substratränder 11, 11' (hier beispielsweise die längeren Substratränder) und zwei gegenüberliegende zweite Substratränder 12, 12' (hier beispielsweise die kürzeren Substratränder) verfügt. Es versteht sich, dass das Substrat 2 jede andere für die jeweilige Anwendung des Flächenheizkörpers 1 geeignete Form haben kann.

Der Flächenheizkörper 1 kann lediglich ein einziges Substrat 2 oder alternativ eine Mehrzahl Substrate 2 aufweisen. Im letztgenannten Fall kann der Flächenheizkörper 1 beispielsweise als Verbundscheibe ausgebildet sein, welche über eine Außen- und eine Innenscheibe verfügt, die beide als Einzelsubstrate ausgebildet und über eine thermoplastische Klebeschicht miteinander verbunden sind. Als Klebeschicht zur Verbindung der beiden Einzelsubstrate kann beispielsweise Kunststoff, insbesondere auf Basis von Polyvinylbutyral (PVB), Ethylen-Vinyl-Acetat (EVA) und Polyurethan (PU), eingesetzt werden. Die Heizschicht 3 kann beispielsweise auf der mit der Klebeschicht verbundenen Seite der Innenscheibe abgeschieden sein, wobei es aber ebenso möglich wäre, die Heizschicht 3 nicht auf die Innenscheibe, sondern anstelle dessen auf den flächenhaften Träger 4 aufzubringen, der anschließend mit den beiden Einzelsubstraten verklebt wird. Da der Aufbau einer Verbundscheibe dem Fachmann an sich wohlbekannt ist, erübrigt es sich hier näher darauf einzugehen.

Wie in Fig. 1 gezeigt, ist die Heizschicht 3 durch eine Mehrzahl geradliniger Trennzonen 5 (Trennlinien) elektrisch unterbrochen, wobei ein zusammenhängender mäander- bzw. S-förmiger Strompfad 6 zwischen zwei Anschlusselektroden 8, 8' von der Heizschicht 3 gebildet wird. Durch Einspeisen eines Heizstroms an den Anschlusselektroden 8, 8' kann der Flächenheizkörper 1 erwärmt werden. Die beiden Anschlusselektroden 8, 8' bestehen hier beispielsweise aus einem gleichen Material und können insbesondere im Druckverfahren durch Aufdrucken beispielsweise einer Silberdruckpaste auf die Heizschicht 3 hergestellt werden. Alternativ wäre es aber auch möglich, die beiden Anschlusselektroden 8, 8' aus schmalen Metallfolienstreifen insbesondere aus Kupfer oder Aluminium herzustellen, die auf der Heizschicht 3 und gegebenenfalls auf dem Substrat 1 fixiert werden. Die Anschlusselektroden 8, 8' können über (nicht dargestellte) Anschlussleiter mit den beiden Polen einer Spannungsquelle, beispielsweise eine Batterie bzw. Akkumulator, insbesondere eine Fahrzeug-Batterie, zum Bereitstellen einer Speisespannung verbunden werden. Die Spannungsquelle kann beispielsweise eine Speisespannung von 12 bis 24 V, entsprechend einer typischen Bordspannung in brennkraftgetriebenen Kraftfahrzeugen, oder von mehr als 40 V, entsprechend einer typischen Bordspannung in Elektrofahrzeugen, zur Verfügung stellen. Insbesondere in der Anwendung als Flächenheizkörper 1 zur Heizung im Innen- oder Außenbereich eines Gebäudes kann es sich bei der Spannungsquelle auch um eine zentrale Spannungsversorgung mit einer Netzspannung von beispielsweise 110 bis 220 Volt handeln.

Im Flächenheizkörper 1 sind die Trennzonen 5 durch Entfernen des Materials der Heizschicht 3 hergestellt, wobei sich beispielsweise V- oder U-förmige Kanäle bzw. Ausnehmungen im Material der Heizschicht 3 ergeben. Diese Kanäle können zusätzlich mit einem elektrisch isolierenden Material verfüllt sein. Das Entfernen der Heizschicht 3 zum Bilden der Trennzonen 5 kann beispielsweise auf mechanische Weise erfolgen, etwa durch Einritzen oder Abschleifen. Erfindungsgemäß bevorzugt ist das Entfernen mithilfe eines Laserstrahls, der das Material der Heizschicht 3 in den Trennzonen 5 entfernt.

Im Sinne vorliegender Erfindung ist unter dem Begriff "Trennzone" allgemein jeder Bereich der Heizschicht 3 zu verstehen, der geeignet ist, zwei angrenzende Gebiete der Heizschicht elektrisch voneinander zu trennen, so dass ein Stromfluss über die Trennzonen 5 verhindert wird. Dazu weisen die Trennzonen 5 beispielsweise einen elektrischen Widerstand von mehr als 1 MΩ auf.

Die Trennzonen 5 haben eine parallele Anordnung und erstrecken sich abwechselnd von dem einen ersten Substratrand 11 bzw. 11' hin zum gegenüberliegenden ersten Substratrand 11' bzw. 11, wobei sie jeweils mit einem Zonenende 10 innerhalb der Heizschicht 3 frei enden, ohne den gegenüberliegenden ersten Substratrand zu erreichen. Hierdurch wird der mäander- bzw. S-förmige Strompfad 6 in der Heizschicht 3 gebildet. Im Allgemeinen ist als Zonenende 10 jener Bereich der Trennzone 5 zu verstehen, der bewirkt, dass der Strompfad 6 innerhalb der Heizschicht 3 in Änderungszonen 9 seine Verlaufsrichtung ändert. Anders ausgedrückt, stellen die Zonenenden 10 jeweils Umkehrpunkte dar, an denen der Heizstrom seine Verlaufsrichtung ändert, hier beispielsweise um 180°. Im vorliegenden Fall werden die Zonenenden 10 durch die freien Enden der Trennlinien bzw. Trennzonen 5 gebildet.

Im Flächenheizkörper 1 sind an den freien Zonenenden 10 jeweils geradlinige Übergangszonen 7 in fluchtender Verlängerung zur geradlinigen Trennzone 5 angeordnet, wobei sich die Übergangszone 7 an die Trennzone 5 unmittelbar anschließt. Denkbar ist aber auch, dass die Übergangszonen 7 eine andere Ausrichtung und Anordnung relativ zur zugeordneten Trennzone 5 haben.

Die Übergangszonen 7 werden jeweils durch Vermindern der Schichtdicke der Heizschicht 3 in Richtung zum Zonenende 10 hin ausgebildet. Durch die Verminderung der Schichtdicke der Heizschicht 3 wird die Leitfähigkeit der Heizschicht 3 lokal herabgesetzt und somit der elektrische Widerstand erhöht.

Wie anhand der vergrößerten Querschnittsdarstellung von Fig. 1 (Schnitt durch den Flächenkörper 1 entlang einer Trennzone 5 und Übergangszone 7) ersichtlich ist, nimmt die Schichtdicke der Heizschicht 3 in der Übergangszone 7 ausgehend vom Zonenende 10 linear zu, bis die durch Abscheidung erzielte volle Schichtdicke der Heizschicht 3 im übrigen Bereich der Heizschicht 3 erreicht ist. Hierdurch ändert sich die elektrische Leitfähigkeit in der Übergangszone 7 in entsprechender Weise, d.h. nimmt zum Zonenende 10 hin ab.

Wie angegeben, befindet sich in der Trennzone 5 (Bereich A) keine Heizschicht 3 auf dem Substrat 2. In der Übergangszone 7 (Bereich B) nimmt die Schichtdicke der Heizschicht 3, beginnend vom freien Zonenende 10 der Trennzone 5, kontinuierlich und linear zu, wobei sich die elektrische Leitfähigkeit der Übergangszone 7 mit zunehmendem Abstand vom freien Zonenende 10 erhöht. In der Heizschicht 3 (Bereich C) liegt eine zumindest annähernd konstante Schichtdicke vor. Der Beginn der Übergangszone 7 ist durch das Zonenende 10 gegeben (Übergang zwischen Bereich A und Bereich B). Das Ende der Übergangszone 7 ist durch das Erreichen der vollen Schichtdicke der Heizschicht 3 definiert (Übergang zwischen Bereich B und Bereich C). Da eine Verminderung der elektrischen Leitfähigkeit dazu führt, dass ein Teil des Stroms in einen Bereich hoher Leitfähigkeit verlagert wird, kann zur Vermeidung von Hot Spots eine Homogenisierung des Stromflusses am Zonenende 10 erzielt werden.

Eine Variation der Schichtdicke der Heizschicht 3 in den Übergangszonen 7 kann beispielsweise durch selektives Entfernen der Heizschicht 3 vorzugsweise mithilfe eines Lasers erfolgen, wobei je nach gewählter Energiedichte des Laserpunkts auf der Heizschicht 3 eine bestimmte Menge an Material der Heizschicht abgetragen wird. Alternativ können jedoch auch andere Laserparameter geeignet angepasst werden, wie beispielsweise Leistung, Frequenz, Pulslänge, Laserstrahlform oder Wiederholrate. Geeignete Wellenlängen des Lasers betragen beispielsweise 355 nm, 532 nm oder 1064 nm. Darüber hinaus ist es bei Verwendung eines steuerbaren und beweglichen Laserkopfes möglich, eine unterschiedliche Abtragung durch Anpassen der Bewegung des Laserpunkts zu erreichen, beispielsweise durch Verändern der Geschwindigkeit oder der Beschleunigung des Laserpunkts. Um eine gewünschte Abtragtiefe der Heizschicht 3 zu erreichen, können die oben genannten Verfahren beliebig kombiniert werden. Die Wahl der Parameter und des verwendeten Lasers hängt dabei von dem zu strukturierenden Material der Heizschicht 3 ab. Grundsätzlich können zum Abtragen der Heizschicht 3 und Herstellen eines Schichtdickengradienten auch andere Verfahren verwendet werden, beispielsweise mechanische oder chemische Verfahren. Ein chemisches Verfahren zum Abtragen der Heizschicht 3 könnte beispielsweise einen Ätzschritt aufweisen.

Vorteilhaft hat die Übergangszone 7 eine in fluchtender Verlängerung der Trennzone 5 sich bemessende Länge, die mindestens der doppelten Breite des Strompfads 6 entspricht, wodurch erreicht werden kann, dass im Bereich der Übergangszone 7 eine besonders gleichmäßige Stromverteilung vorliegt und dem Entstehen von Hot Spots zuverlässig und sicher entgegen gewirkt bzw. diese vermieden werden können. Die Breite des Strompfads ergibt sich im gezeigten Ausführungsbeispiel durch den senkrechten Abstand zweier geradliniger Trennzonen 5.

Ergänzend zu oder anstelle einer Verminderung der Schichtdicke der Heizschicht 3 kann die Übergangszone 7 auch durch andere geeignete Maßnahmen gebildet werden, die in der Lage sind, die elektrische Leitfähigkeit der Heizschicht 3 im Bereich des freien Zonenendes 10 in der gewünschten Weise zu verändern, so beispielsweise durch Verändern der Porosität der Heizschicht 3 oder Hinzufügen von Verunreinigungen oder Dotierstoffen zur Heizschicht 3. Insbesondere kann die Übergangszone 7 so ausgebildet werden, dass eine Porosität der Heizschicht 3 zum freien Zonenende 10 hin zunimmt, womit einhergeht, dass die elektrische Leitfähigkeit der Heizschicht 3 abnimmt. Für den Fall, dass die Heizschicht 3 einen Dotierstoff zur Erhöhung der elektrischen Leitfähigkeit aufweist, kann die Übergangszone 7 so ausgebildet sein, dass eine Konzentration des Dotierstoffs in der Übergangszone zum freien Zonenende hin abnimmt, so dass die elektrische Leitfähigkeit der Heizschicht 3 abnimmt. Für den Fall, dass die Heizschicht 3 einen Dotierstoff zur Verminderung der elektrischen Leitfähigkeit aufweist, kann die Übergangszone 7 so ausgebildet sein, dass eine Konzentration des Dotierstoffs in der Übergangszone zum freien Zonenende hin zunimmt, so dass die elektrische Leitfähigkeit der Heizschicht 3 abnimmt.

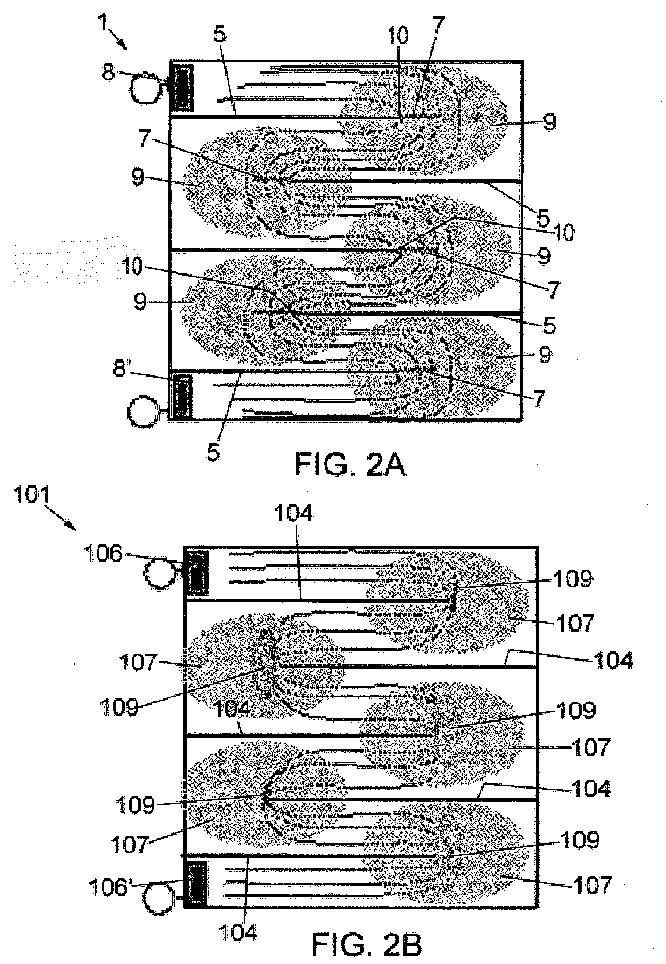

Fig. 2A zeigt den Flächenheizkörper 1 von Fig. 1, wobei der Strompfad 6 anhand von Stromlinien dargestellt ist. Demnach wird im Bereich einer Krümmung des Strompfads 6 durch eine Änderung der elektrischen Leitfähigkeit in den Übergangszonen 7 verhindert, dass sich der Stromfluss an den freien Zonenenden 10 konzentriert, wodurch dem Auftreten von Hot Spots entgegen gewirkt werden kann. Im Vergleich hierzu verdeutlicht Fig. 2B eine entsprechende Situation im herkömmlichen Flächenkörper 101 von Fig. 3. Demnach konzentriert sich der Stromfluss im Bereich der freien Zonenenden 10, wodurch sich die Temperatur in diesen Bereichen stark erhöht, mit der Folge einer unerwünschten, ungleichmäßigen Wärmeverteilung im Flächenheizkörper 101 und dem Auftreten von Hot Spots 109.

### Bezugszeichenliste

- 1: Flächenheizkörper
- 2: Substrat
- 3: Heizschicht
- 4: Träger
- 5: Trennzone
- 6: Strompfad
- 7: Übergangszone
- 8, 8': Anschlusselektrode
- 9: Änderungszone
- 10: Zonenende
- 11, 11': erster Substratrand
- 12, 12': zweiter Substratrand
- 13: Substratfläche
- 101: Flächenheizkörper
- 102: Substrat
- 103: Heizschicht
- 104: Trennzone
- 105: Strompfad
- 106, 106': Anschlusselektrode
- 107: Änderungszone
- 108: Zonenende
- 109: Hot Spot

## Patentansprüche

1. Flächenheizkörper (1), welcher umfasst:
- zumindest ein Substrat (2) mit einer Substratfläche (13),
- eine elektrische Heizschicht (3) aus einem elektrisch leitfähigen Material zum Heizen des Substrats (2), die sich zumindest über einen Teil der Substratfläche (13) erstreckt und mit mindestens zwei zum Anschluss an eine Spannungsquelle vorgesehene Elektroden (8, 8') so verbunden ist, dass zwischen den Elektroden ein Strompfad (6) für einen Heizstrom geformt ist,
- eine oder mehrere Trennzonen (5), welche die Heizschicht (3) elektrisch unterteilen, wobei die Trennzonen (5) jeweils über mindestens ein freies Zonenende (10) verfügen und so ausgebildet sind, dass der Strompfad (6) an den Zonenenden (10) seine Verlaufsrichtung ändert, **dadurch gekennzeichnet, dass** sich an das Zonenende (10) einer jeden Trennzone (5) jeweils eine Übergangszone (7) anschließt, die so ausgebildet ist, dass die elektrische Leitfähigkeit der Heizschicht (3) zum freien Zonenende (10) hin abnimmt.

2. Flächenheizkörper (1) nach Anspruch 1, bei welchem die Übergangszone (7) eine Länge aufweist, die wenigstens die Hälfte einer sich senkrecht zu dessen Erstreckung sich bemessenden Breite des Strompfads (6) entspricht.

3. Flächenheizkörper (1) nach Anspruch 1 oder 2, bei welchem in der Übergangszone (7) eine Schichtdicke der Heizschicht (3) zum freien Zonenende (10) hin abnimmt.

4. Flächenheizkörper (1) nach einem der Ansprüche 1 bis 3, bei welchem in der Übergangszone (7) eine Porosität der Heizschicht (3) zum freien Zonenende (10) hin zunimmt.

5. Flächenheizkörper (1) nach einem der Ansprüche 1 bis 4, bei welchem die Heizschicht (3) einen Dotierstoff zur Erhöhung der elektrischen Leitfähigkeit aufweist, wobei eine Konzentration des Dotierstoffs in der Übergangszone (7) zum freien Zonenende (10) hin abnimmt.

6. Flächenheizkörper (1) nach einem der Ansprüche 1 bis 4, bei welchem die Heizschicht (3) einen Dotierstoff zur Verminderung der elektrischen Leitfähigkeit aufweist, wobei eine Konzentration des Dotierstoffs in der Übergangszone (7) zum freien Zonenende (10) hin zunimmt.

7. Flächenheizkörper (1) nach einem der Ansprüche 1 bis 6, bei welchem auf die Substratfläche (13) ein mit der elektrischen Heizschicht (3) versehener Träger, beispielsweise eine Kunststoff-Folie (4), aufgebracht ist.

8. Träger (4), beispielsweise eine Kunststoff-Folie, mit einer zumindest auf einen Teil einer Trägerfläche aufgebrachten elektrischen Heizschicht (3) aus einem elektrisch leitfähigen Material und mit mindestens zwei zum Anschluss an eine Spannungsquelle vorgesehene Elektroden (8, 8'), die mit der Heizschicht (3) so verbunden sind, dass zwischen den Elektroden ein Strompfad (6) für einen Heizstrom geformt ist, wobei die Heizschicht (3) durch eine oder mehrere Trennzonen (5) elektrisch unterteilt ist, die jeweils über mindestens ein freies Zonenende (10) verfügen und so ausgebildet sind, dass der Strompfad an den freien Zonenenden (10) seine Verlaufsrichtung ändert, **dadurch gekennzeichnet, dass** sich an das freie Zonenende (10) einer jeden Trennzone (5) jeweils eine Übergangszone (7) anschließt, die so ausgebildet ist, dass die elektrische Leitfähigkeit der Heizschicht (3) zum freien Zonenende (10) hin abnimmt.

9. Verfahren zur Herstellung eines Flächenheizkörpers (1), mit den folgenden Schritten:
- Bereitstellen zumindest eines flächigen Substrats (2) mit einer Substratfläche (13) und einer elektrischen Heizschicht (3) aus einem elektrisch leitfähigen Material zum Heizen des Substrats (2), die sich zumindest über einen Teil der Substratfläche (13) erstreckt und mit mindestens zwei zum Anschluss an eine Spannungsquelle vorgesehene Elektroden (8, 8') so verbunden ist, dass zwischen den Elektroden ein Strompfad (6) für einen Heizstrom geformt ist;
- elektrisches Unterteilen der Heizschicht (3) durch eine oder mehrere Trennzonen (5), wobei die Trennzonen (5) jeweils über mindestens ein freies Zonenende (10) verfügen und so ausgebildet sind, dass der Strompfad (6) an den freien Zonenenden (10) seine Verlaufsrichtung ändert;
- Erzeugen einer oder mehrerer Übergangszonen (7), **dadurch gekennzeichnet, dass** sich jede Übergangszone (7) an das freie Zonenende (10) einer Trennzone (5) anschließt und die elektrische Leitfähigkeit der Heizschicht (3) zum freien Zonenende (10) hin abnimmt.

10. Verfahren nach Anspruch 9, bei welchem auf die Substratfläche (13) ein mit der elektrischen Heizschicht (3) versehener Träger (4), insbesondere eine Kunststoff-Folie, aufgebracht wird.

11. Verwendung eines Flächenheizkörpers (1) nach einem der Ansprüche 1 bis 7 als funktionales Einzelstück und als Einbauteil in Möbeln, Geräten und Gebäuden, insbesondere als Heizkörper in Wohnräumen, beispielsweise als wandmontierbarer oder frei stehender Heizkörper, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

## Claims

1. Panel heating element (1), which comprises:
- at least one substrate (2) with a substrate surface (13),
- an electrical heating layer (3) made from an electrically conductive material for heating the substrate (2), which heating layer extends at least over a part of the substrate surface (13) and is connected to at least two electrodes (8, 8') provided for connection to a voltage source such that a current path (6) for a heating current is formed between the electrodes,
- one or a plurality of separating zones (5), which electrically divide the heating layer (3), wherein each of the separating zones (5) has at least one free zone end (10) and are implemented such that the current path (6) changes its direction of flow on the zone ends (10), **characterized in that** in each case a transition zone (7), which is implemented such that the electrical conductivity of the heating layer (3) decreases toward the free zone end (10), adjoins the zone end (10) of each separating zone.

2. Panel heating element (1) according to claim 1, wherein the transition zone (7) has a length that corresponds to at least half of a width of the current path (6) measured perpendicular to its length.

3. Panel heating element (1) according to claim 1 or 2, wherein in the transition zone (7), a layer thickness of the heating layer (3) decreases toward the free zone end (10).

4. Panel heating element (1) according to one of claims 1 through 3, wherein in the transition zone (7), a porosity of the heating layer (3) increases toward the free zone end (10).

5. Panel heating element (1) according to one of claims 1 through 4, wherein the heating layer (3) has a dopant to increase the electrical conductivity, with a concentration of the dopant in the transition zone (7) decreasing toward the free zone end (10).

6. Panel heating element (1) according to one of claims 1 through 4, wherein the heating layer (3) has a dopant to reduce the electrical conductivity, with a concentration of the dopant in the transition zone (7) increasing toward the free zone end (10).

7. Panel heating element (1) according to one of claims 1 through 6, wherein on the substrate surface (13), a carrier, for example, a plastic film (4), provided with the electrical heating layer (3), is applied.

8. Carrier (4), for example, a plastic film, with an electrical heating layer (3) made of an electrically conductive material applied at least on a part of a carrier surface and with at least two electrodes (8, 8') provided for connection to a voltage source, which are connected to the heating layer (3) such that a current path (6) for a heating current is formed between the electrodes, with the heating layer (3) electrically divided by one or a plurality of separating zones (5), each of which has at least one free zone end (10) and which are implemented such that the current path changes its direction of flow at the free zone ends (10), **characterized in that** in each case a transition zone (7), which is implemented such that the electrical conductivity of the heating layer (3) decreases toward the free zone end (10), adjoins the free zone end (10) of each separating zone (5).

9. Method for producing a panel heating element (1), with the following steps:
- provision of at least one flat substrate (2) with a substrate surface (13) and an electrical heating layer (3) made of an electrically conductive material for heating the substrate (2), which heating layer extends at least over a part of the substrate surface (13) and is connected to at least two electrodes (8, 8') provided for connection to a voltage source such that a current path (6) for a heating current is formed between the electrodes;
- electrical division of the heating layer (3) by one or a plurality of separating zones (5), with the separating zones (5) having, in each case, at least one free zone end (10) and being implemented such that the current path (6) changes its direction of flow at the free zone ends (10);
- creation of one or a plurality of transition zones (7), **characterized in that** each transition zone (7) adjoins the free zone end (10) of a separating zone (5) and the electrical conductivity of the heating layer (3) decreases toward the free zone end (10).

10. Method according to claim 9, wherein a carrier (4) provided with the electrical heating layer (3), in particular a plastic film, is applied on the substrate surface (13).

11. Use of a panel heating element (1) according to one of claims 1 through 7 as a functional individual piece and as a built-in part in furniture, devices, and buildings, in particular as a heating element in residential spaces, for example, as wall-mountable or freestanding heating elements, as well as in means of transportation for travel on land, in the air, or on water, in particular in motor vehicles, for example, as a windshield, rear window, side window, and/or glass roof.

## Revendications

1. Élément chauffant plan (1), ayant:
- au moins un substrat (2) avec une surface de substrat (13),
- une couche chauffante électrique (3) en matériau conducteur pour chauffer le substrat (2), qui s'étend sur au moins une partie de la surface du substrat (13) et est reliée à au moins deux électrodes conçus de façon à être raccordées à une source de tension (8, 8') de façon à former un trajet de courant (6) pour un chauffage entre les électrodes,
- une ou plusieurs zones de séparation (5), qui subdivisent électriquement la couche chauffante (3), où les zones de séparation (5) disposent chacune d'au moins une extrémité de zone (10) libre et sont formées de façon que le trajet de courant (6) change de direction aux extrémités de zone (10), **caractérisées en ce qu'**une zone de transition (7) est attachée à l'extrémité de zone (10) de chaque zone de séparation (5), qui est conçue de sorte que la conductivité électrique de la couche chauffante (3) diminue vers l'extrémité de zone (10) libre.

2. Élément chauffant plan (1) selon la revendication 1, où la zone de transition (7) présente une longueur, qui correspond à au moins la moitié d'une largeur du trajet de courant (6) mesurée perpendiculaire à son extension.

3. Élément chauffant plan (1) selon l'une quelconque des revendications 1 ou 2, où une épaisseur de couche chauffante (3) dans la zone de transition (7) diminue vers l'extrémité de zone libre (10).

4. Élément chauffant plan (1) selon l'une quelconque des revendications 1 à 3, où une porosité de la couche chauffante (3) augmente dans la zone de transition (7) vers l'extrémité de zone libre (10).

5. Élément chauffant plan (1) selon l'une quelconque des revendications 1 à 4, où la couche chauffante (3) présente une substance dopante pour augmenter la conductivité électrique, où une concentration du matériau dopant diminue dans la zone de transition (7) vers l'extrémité de zone libre (10).

6. Élément chauffant plan (1) selon l'une quelconque des revendications 1 à 4, où la couche chauffante (3) présente une substance dopante pour diminuer la conductivité électrique, où une concentration du matériau dopant augmente dans la zone de transition (7) vers l'extrémité de zone libre (10).

7. Élément chauffant plan (1) selon l'une quelconque des revendications 1 à 6, où un support doté d'une couche chauffante électrique (3), par exemple, un film plastique (4), est appliqué sur la surface du substrat (13).

8. Support (4), par exemple, une feuille de plastique, avec une couche chauffante (3) électrique faite d'un matériau conducteur appliquée sur au moins une partie d'une surface de support, et avec au moins deux électrodes conçues pour être raccordées à une source d'alimentation (8, 8'), qui sont raccordées à la couche chauffante (3) de manière à former un trajet de courant (6) entre les électrodes pour un courant de chauffage, où la couche chauffante (3) est sous-divisée électriquement par une ou plusieurs zones de séparation (5), qui disposent chacune d'au moins une extrémité de zone (10) libre et qui sont conçus de telle sorte que le trajet de courant (6) change de direction aux extrémités de zone (10) libres, **caractérisées en ce qu'**une zone de transition (7) est attachée à l'extrémité de zone (10) de chaque zone de séparation (5), conçue de sorte que la conductivité électrique de la couche chauffante (3) diminue vers l'extrémité de zone (10) libre.

9. Procédé de production d'un élément chauffant plan (1), comprenant les étapes suivantes :
- fourniture d'au moins un substrat (2) plan avec une surface de substrat (13) et une couche chauffante électrique (3) faite d'un matériau électriquement conducteur pour le chauffage du substrat (2), qui s'étend sur au moins une partie de la surface du substrat (13) et qui est connectée à au moins deux électrodes conçues pour être raccordées à une source d'alimentation (8, 8'), de manière à former un trajet de courant (6) entre les électrodes pour un courant de chauffage ;
- subdivision électrique de la couche chauffante (3) par une ou plusieurs zones de séparation (5), où les zones de séparation (5) disposent chacune d'au moins une extrémité de zone libre (10) et sont formées de façon que le trajet de courant (6) change de direction aux extrémités de zone (10) libres;
- création d'une ou plusieurs zones de transition (7), **caractérisées en ce que** chaque zone de transition (7) est attachée à l'extrémité de zone (10) libre d'une zone de séparation (5) et que la conductivité électrique de la couche chauffante (3) diminue vers l'extrémité de zone (10) libre.

10. Procédé selon la revendication 9, où un support (4) doté d'une couche chauffante électrique (3), en particulier d'un film plastique, est appliqué sur le substrat de surface (13).

11. Utilisation d'un élément chauffant plan (1) selon l'une quelconque des revendications 1 à 7 comme élément unique fonctionnel et comme composant dans les meubles, les équipements et les bâtiments, en particulier comme radiateur dans les logements, par exemple comme radiateur mural ou autoportant, ainsi que dans les moyens de locomotion pour les déplacements par terre, dans l'air ou sur l'eau, en particulier dans des véhicules automobiles, par exemple, comme pare-brise, lunette arrière, fenêtre latérale et/ou toit en verre.
